# FASCICULE DE BREVET EUROPEEN

(11) **EP 0 525 717 B1**
(45) Date de publication et mention de la délivrance du brevet: **11.09.1996**
(21) Numéro de dépôt: 92112851.8
(22) Date de dépôt: 28.07.1992
(51) Int. Cl.: G01N 19/10, G01D 5/26

(54) **Capteur d'humidité à fibre optique**
Feuchtigkeitssensor mit optischer Faser
Fiber optical humidity sensor

(30) Priorité: 02.08.1991 FR 9109890
(43) Date de publication de la demande: 03.02.1993
(73) Titulaire: ALCATEL CABLE, F-92111 Clichy Cédex (FR)
(72) Inventeur: Bonicel, Jean-Pierre, F-69005 Lyon (FR)
(74) Mandataire: Weinmiller, Jürgen

(56) Documents cités:
- EP-A- 0 086 024
- EP-A- 0 240 100
- EP-A- 0 357 253
- DE-A- 3 327 158
- JOURNAL OF LIGHTWAVE TECHNOLOGY. vol. LT-4, no. 7, Juillet 1986, NEW YORK US pages 833-836 M. IZUTSU ET AL. 'Integrated Optic Temperature and Humidity Sensors'
- NTT REVIEW vol. 3, no. 1, Janvier 1991, pages 97 - 104 N. TOMITA ET AL. 'Optical Fiber Line Support System'

## Description

La présente invention porte sur les capteurs d'humidité à fibre optique, destinés à permettre une surveillance de l'état de liaisons optiques. De tels capteurs sont utilisés notamment dans les points particuliers, tels que boîtier d'épissures sur les liaisons optiques, où une pénétration d'eau et d'humidité possible est préjudiciable à la qualité de la transmission. Ils peuvent également être utilisés dans des systèmes industriels quelconques nécessitant une surveillance d'humidité ou d'eau.

Ces capteurs à fibre optique sont déjà en tant que tels connus. Ils utilisent un matériau absorbant et gonflant en présence d'humidité, qui vient comprimer plus ou moins fortement une fibre optique affectée notamment à la surveillance de la liaison en fonction de l'humidité absorbée. La contrainte créée sur cette fibre optique provoque une atténuation locale résultante de transmission, qui est détectée.

L'article intitulé "Optical Fiber Line Support System" publié dans NTT Review vol.3 n°1, janvier 1991 décrit un tel capteur. La fibre optique traverse un système mécanique, à mâchoire fixe et mâchoire mobile entre lesquelles passe la fibre et à matériau absorbant et gonflant en présence d'humidité qui actionne le cas échéant la mâchoire mobile. Le système ne crée aucune contrainte sur la fibre en l'absence d'humidité absorbée mais doit la comprimer avec l'humidité absorbée par ce matériau.

Ce système a l'avantage d'être particulièrement simple. Par contre, il est de temps de réaction relativement long et est peu précis, pour pouvoir traduire par des contraintes rapides et variables des variations d'hygrométrie ambiante pouvant être préjudiciables à la qualité de la transmission sur la liaison optique surveillée à partir de ce capteur.

La présente invention a pour but de remédier à ces inconvénients.

Elle a pour objet un capteur d'humidité à fibre optique, comportant un système mécanique à mâchoire fixe et mâchoire mobile, entre lesquelles est montée ladite fibre, et à élément en matériau sensible à l'humidité couplé à ladite mâchoire mobile pour son actionnement en présence d'humidité vers la mâchoire fixe et pour une compression résultante de ladite fibre optique, caractérisé en ce que ledit élément est en matériau présentant une perte de résistance mécanique avec l'humidité et est monté à l'encontre de l'action d'un moyen élastique sollicitant ladite mâchoire mobile vers ladite mâchoire fixe.

Le capteur selon l'invention présente, en outre, au moins l'une des caractéristiques suivantes :
- ledit élément en matériau sensible à l'humidité est monté en écarteur desdites mâchoires, assurant leur écartement à l'encontre de l'action dudit élément élastique, sans compression de ladite fibre en l'absence d'humidité mais libérant au moins partiellement l'action dudit élément élastique en présence d'humidité ;
- ledit matériau est choisi parmi ceux à base de cellulose, de polyacrylamide, de saccharose et d'hydrate de carbone, notamment ;
- ladite fibre optique est une fibre optique indépendante d'une liaison optique en surveillance ou est l'une des fibres optiques de ladite liaison optique en surveillance.

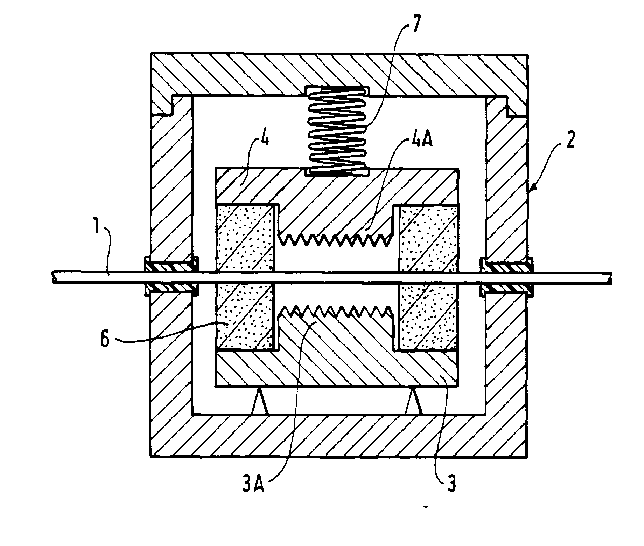

Les caractéristiques et les avantages de la présente invention ressortiront de la description donnée ci-après d'un mode de réalisation illustré à titre d'exemple dans la figure unique du dessin ci-annexé.

Dans cette figure unique, le capteur d'humidité est à fibre optique 1. Il est monté dans un boîtier 2. Le boîtier est peu ou pas étanche. Ce boîtier 2 est notamment un boîtier contenant également des épissures entre deux tronçons d'une liaison optique multifibres à surveiller, à laquelle est associé dans les conditions d'utilisation le capteur. La fibre optique 1 peut être une fibre indépendante de la liaison à surveiller et être une fibre monomode ou multimode de surveillance. Elle peut en variante être une fibre appartenant à la liaison à surveiller et est une fibre monomode ou multimode, utilisée sur une première longueur d'onde pour la transmission et sur une deuxième longueur d'onde pour la surveillance.

Le capteur est constitué par un système mécanique de compression de la fibre optique 1 en fonction de l'humidité dans le boîtier 2. Il comporte une mâchoire fixe 3 et une mâchoire mobile 4 de part et d'autre de la fibre optique 1, passant entre elles. Ces deux mâchoires ont l'une et l'autre un épaulement latéral médian 3A, 4A sur leur bord interne en vis-à-vis, cet épaulement étant lui-même à bord dentelé comme illustré ou ondulé ou simplement convexe et lisse ou non.

La mâchoire fixe est portée par l'une des parois du boîtier et est fixe relativement à cette paroi. La mâchoire mobile est quant à elle sollicitée par des moyens élastiques vers la mâchoire fixe. Elle est maintenue relativement à cette mâchoire fixe et à l'encontre de ces moyens élastiques par un élément de contre-réaction variable avec les conditions d'humidité, ayant une haute résistance mécanique en l'absence d'humidité dans le boîtier mais perdant cette caractéristique mécanique avec l'humidité.

Dans le mode de réalisation illustré, cet élément de contre-réaction est monté en écarteur des mâchoires et constitué par deux paires d'entretoises ou butées 6 ou par deux bagues entretoises entre les mâchoires 3 et 4, agissant à l'encontre d'un ressort de compression 7. Le ressort 7 est monté entre la mâchoire mobile et la paroi en regard du boîtier.

Cet élément de contre-réaction est réalisé en un matériau à base de cellulose, de polyacrylamide, de saccharose ou d'hydrate de carbone, notamment, qui présente une résistance mécanique élevée à sec, mais dont cette résistance mécanique diminue en présence et en fonction de l'humidité ambiante et peut même devenir quasi-nulle, pour libérer en correspondance l'action de l'élément élastique sollicitant la mâchoire mobile.

Une éventuelle contrainte mécanique exercée sur le fibre optique 1 est détectée et localisée par rétrodiffusion, notamment.

Bien entendu toute autre disposition équivalente de l'élément élastique et de l'élément de contre-réaction, avec ce dernier s'opposant à sec à l'action de l'élément élastique mais offrant une résistance mécanique moindre en présence d'humidité, peut être adoptée sans pour autant sortir du cadre de la présente invention.

## Revendications

1. Capteur d'humidité à fibre optique, comportant un système mécanique à mâchoire fixe et mâchoire mobile, entre lesquelles est montée ladite fibre, et à élément en matériau sensible à l'humidité couplé à ladite mâchoire mobile pour son actionnement en présence d'humidité vers la mâchoire fixe et pour une compression résultante de ladite fibre optique, caractérisé en ce que ledit élément (6) est en matériau présentant une perte de résistance mécanique avec l'humidité et est monté à l'encontre de l'action d'un moyen élastique (7) sollicitant ladite mâchoire mobile (4) vers ladite mâchoire fixe (3).

2. Capteur selon la revendication 1, caractérisé en ce que ledit élément (6) en matériau sensible à l'humidité est monté en écarteur entre lesdites mâchoires.

3. Capteur selon l'une des revendications 1 et 2, caractérisé en ce que au moins l'une desdites mâchoires présente un épaulement (3A, 4A) en regard de l'autre mâchoire.

4. Capteur selon la revendication 3, caractérisé en ce que le bord dudit épaulement (3A, 4B) est dentelé ou ondulé et/ou convexe.

5. Capteur selon l'une des revendications 1 à 4, caractérisé en ce que ledit élément en matériau sensible à l'humidité est constitué en l'un des matériaux définis par ceux à base de cellulose, de polyacrylamide, de saccharose et d'hydrate de carbone.

6. Capteur selon l'une des revendications 1 à 5, caractérisé en ce que ladite fibre optique (1) est indépendante d'une liaison optique surveillée à partir de ce capteur ou appartient à ladite liaison optique et est une fibre monomode ou multimode.

## Patentansprüche

1. Feuchtigkeitssensor mit einer Lichtleitfaser, der ein mechanisches System mit einer festen und einer beweglichen Klemmbacke, zwischen denen die Faser montiert ist, und mit einem Element aus feuchtigkeitsempfindlichem Material besitzt, das an die bewegliche Klemmbacke gekoppelt ist, um sie bei Feuchtigkeit in Richtung zur festen Klemmbacke zu drücken und dadurch die Lichtleitfaser zu komprimieren, dadurch gekennzeichnet, daß das Element (6) aus einem Material ist, das einen mechanischen Widerstandsverlust unter Feuchtigkeitseinfluß aufweist und gegen die Kraft eines elastischen Mittels (7) montiert ist, das die bewegliche Klemmbacke (4) zur festen Klemmbacke (3) drückt.

2. Sensor nach Anspruch 1, dadurch gekennzeichnet, daß das Element (6) aus feuchtigkeitsempfindlichem Material als Abstandshalter zwischen den beiden Klemmbacken montiert ist.

3. Sensor nach einem der Ansprüche 1 und 2, dadurch gekennzeichnet, daß mindestens eine der Klemmbacken eine Schulter (3A, 4A) gegenüber der anderen Klemmbacke aufweist.

4. Sensor nach Anspruch 3, dadurch gekennzeichnet, daß der Rand dieser Schulter (3A, 4B) gezahnt oder gewellt und/oder konvex ist.

5. Sensor nach einem der Ansprüche 1 bis 4, dadurch gekennzeichnet, daß das feuchtigkeitsempfindliche Element aus den Materialien auf der Basis von Cellulose, von Polyacrylamid, von Saccharose und Kohlenhydrat ausgewählt wird.

6. Sensor nach einem der Ansprüche 1 bis 5, dadurch gekennzeichnet, daß die Lichtleitfaser (1) eine von einer überwachten optischen Nachrichtenverbindung unabhängige Lichtleitfaser oder eine der Lichtleitfasern dieser überwachten optischen Nachrichtenverbindung ist, und daß sie eine Monomode- oder Multimode-Lichtleitfaser ist.

## Claims

1. An optical fiber moisture sensor comprising a mechanical system having a stationary jaw and a moving jaw between which said fiber is mounted, the sensor also including an element made of moisture-sensitive material coupled to said moving jaw to allow it to be urged towards said stationary jaw in the presence of moisture, thereby applying compression to said optical fiber, the sensor being characterized in that said element (6) is made of a material that looses mechanical strength with increasing moisture and that is mounted to oppose the action of resilient means (7) urging said moving jaw (4) towards said stationary jaw (3).

2. A sensor according to claim 1, characterized in that said element (6) made of moisture-sensitive material is mounted as a spacer between said jaws.

3. A sensor according to claim 1 or 2, characterized in that at least one of said jaws has a shoulder (3A, 4A) facing the other jaw.

4. A sensor according to claim 3, characterized in that the edge of said shoulder (3A, 4A) is serrated, or corrugated, and/or convex.

5. A sensor according to any one of claims 1 to 4, characterized in that said element of moisture-sensitive material is made of a material defined by materials based on cellulose, polyacrylamide, saccharose, and carbon hydrate.

6. A sensor according to any one of claims 1 to 5, characterized in that said optical fiber (1) is independent of an optical connection monitored by means of said sensor, or else belong to said optical connection, and makes use of a fiber that is monomode or multimode.
